# EUROPEAN PATENT APPLICATION

(11) **EP 2 325 497 A2**
(43) Date of publication of application: **25.05.2011**
(21) Application number: 10191010.7
(22) Date of filing: 12.11.2010
(51) Int. Cl.: F04D 29/28, F04D 29/58

(54) **Open-hub centrifugal blower assembly**

(30) Priority: 16.11.2009 US 619450
(71) Applicant: ROBERT BOSCH GMBH, 70442 Stuttgart (DE)
(72) Inventor: Czulak, Alexander, Wayland, MA 01778 (US); Chapman, Thomas R., Templeton, MA 01468 (US)
(74) Representative: Dreiss

(57) **Abstract**

An open-hub centrifugal blower (26) includes a hub (86) rotatable about an axis, an outer rim (110) concentric with the hub, a plurality of blades (122) coupled to the outer rim, a plurality of spokes (130) interconnecting the hub and the outer rim, and a cooling rib (138) extending from at least one of the spokes.

## Description

### FIELD OF THE INVENTION

The present invention relates to centrifugal blower assemblies, and more particularly to centrifugal blower assemblies used in vehicle heating, ventilation, and cooling systems.

### BACKGROUND OF THE INVENTION

Conventional centrifugal blower assemblies utilized in vehicle heating, ventilation, and cooling ("HVAC") systems typically include a volute, an electric motor and motor housing supported by the volute, and a centrifugal blower driven by the motor. A cooling air passageway is typically defined by the motor housing and the volute to provide cooling air to the motor during operation of the centrifugal blower assembly. The inlet of the cooling air passageway is typically positioned near the outlet of the volute (i.e., in a region of relatively high pressure) in conventional centrifugal blower assemblies to ensure a sufficiently large pressure differential along the length of the cooling airflow passageway. By providing a large pressure differential along the cooling air passageway, the flow rate of the airflow passing through the cooling air passageway is maintained high enough to satisfy the cooling requirements of the motor. However, because the inlet of the cooling air passageway in conventional centrifugal blower assemblies must often be positioned near the outlet of the volute, the flexibility of the design of conventional centrifugal blower assemblies is often reduced.

### SUMMARY OF THE INVENTION

The present invention provides, in one aspect, an open-hub centrifugal blower including a hub rotatable about an axis, an outer rim concentric with the hub, a plurality of blades coupled to the outer rim, a plurality of spokes interconnecting the hub and the outer rim, and a cooling rib extending from at least one of the spokes.

The present invention provides, in another aspect, a centrifugal blower assembly including a volute, a motor housing coupled to the volute, a motor supported by the motor housing and having an output shaft, and an open-hub centrifugal blower drivably coupled to the motor and positioned in the volute. The blower includes a hub rotatable about an axis, an outer rim concentric with the hub, a plurality of blades coupled to the outer rim and extending from the outer rim, a plurality of spokes interconnecting the hub and the outer rim, and a cooling rib extending from at least one of the spokes toward the motor housing.

Other features and aspects of the invention will become apparent by consideration of the following detailed description and accompanying drawings.

### BRIEF DESCRIPTION OF THE DRAWINGS

FIG. 1 is an exploded perspective view of a centrifugal blower assembly of the invention.

FIG. 2 is a top perspective view of a centrifugal blower of the centrifugal blower assembly of FIG. 1.

FIG. 3 is a bottom perspective view of the centrifugal blower of FIG. 2.

FIG. 4 is an assembled, cross-sectional view of the centrifugal blower assembly of FIG. 1

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

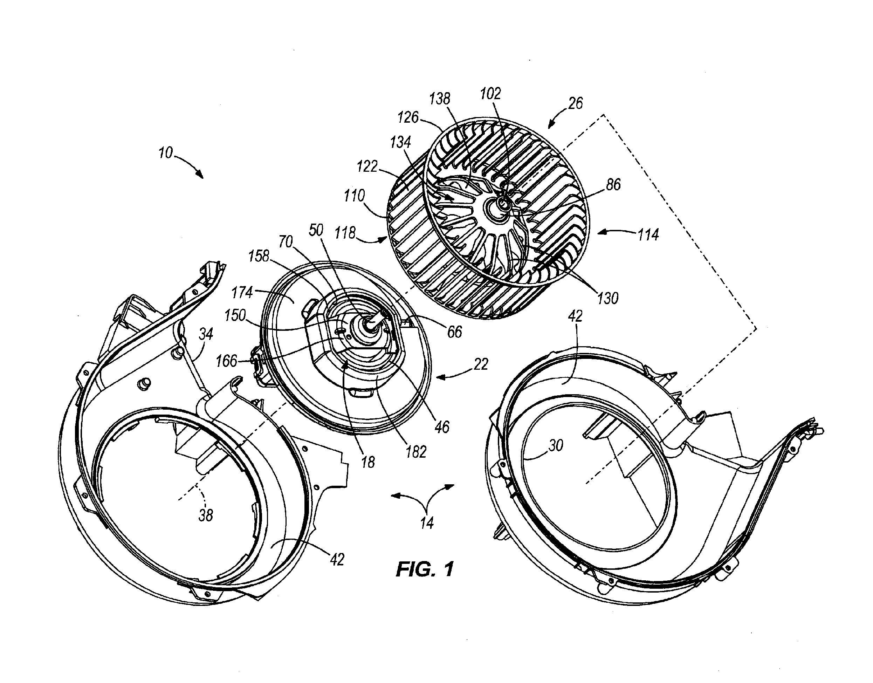

With reference to FIG. 1, a centrifugal blower assembly 10 includes a volute 14, a motor 18 and motor housing 22 supported by the volute 14, and a centrifugal blower 26 drivably coupled to the motor 18 to create an airflow through the volute 14. The volute 14 includes an inlet 30 and an outlet 34 oriented substantially normal to the inlet 30, such that an airflow is drawn by the centrifugal blower 26 through the inlet 30 in an axial direction with respect to an axis 38 of rotation of the centrifugal blower 26 and discharged through the outlet 34 in a radial direction with respect to the axis 38 of rotation of the centrifugal blower 26.

In the illustrated construction of the centrifugal blower assembly 10, the volute 14 is formed of two pieces which, when assembled, define a scroll 42 within which the airflow created by the blower 26 flows. Alternatively, the volute 14 may be formed from any of a number of different pieces or as a single piece. As is understood by one of ordinary skill in the art, the scroll 42 defines a progressively increasing cross-sectional area from the beginning of the scroll 42 (i.e., where the cross-sectional area of the scroll 42 is at a minimum value) leading to the outlet 34 of the volute 14 (i.e., where the cross-sectional area of the scroll is at a maximum value) to facilitate expansion of the airflow as it flows from the beginning of the scroll 42 to the outlet 34.

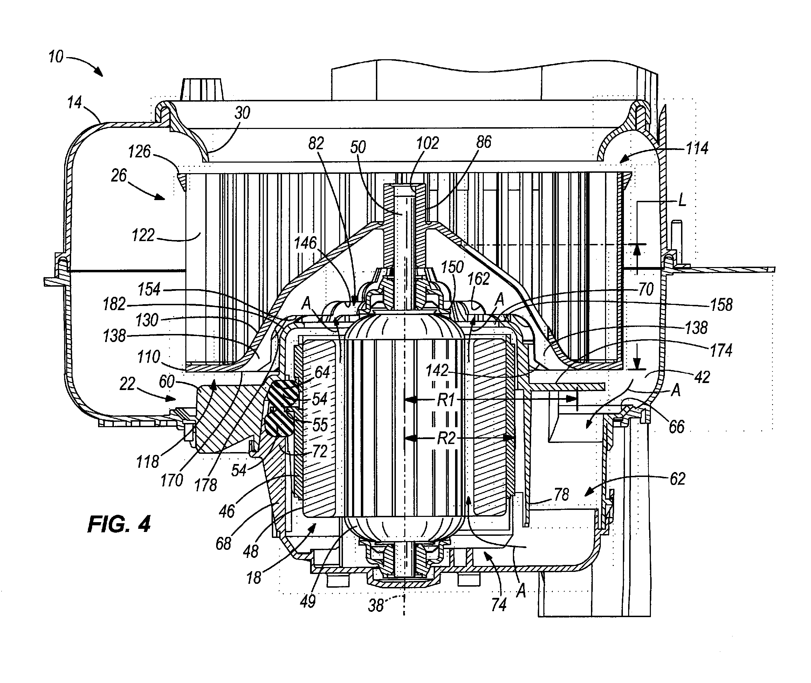

With reference to FIG. 4, the motor 18 is configured as an open-frame electric motor 18 having an outer can 46, a stator 48 consisting of a plurality of permanent magnets, an armature 49 consisting of a plurality of windings, and an output shaft 50 co-rotating with the armature 49 and protruding from the can 46. As shown in FIG. 4, a radial gap exists between the stator 48 and the armature 49 through which an airflow may pass to cool the internal components of the motor 18 (e.g., the stator 48, the armature 49, commutator brushes, etc.). Alternatively, the outer can 46 may be substantially closed, and the motor 18 may be configured as can-style electric motor.

With continued reference to FIG. 4, the motor housing 22 couples the motor 18 to the volute 14 and also maintains the output shaft 50 of the motor 18 (and therefore the centrifugal blower 26) in coaxial alignment with the inlet 30 of the volute 14. The motor 18 8 includes a plurality of vibration isolation elements 54 positioned between the outer can 46 and the motor housing 22 to reduce the amount of vibration transferred from the motor 18 to the motor housing 22 and to coaxially align the output shaft 50 with the inlet 30 of the volute 14. In the illustrated construction of the assembly 10, the vibration isolation elements 54 are configured as elastomeric (i.e., rubber) balls or spheres, and interconnected pairs of elements 54 are supported on the outer can 46 by respective tabs 55 (only one of which is shown in FIG. 4). Alternatively, the elements 54 may have a different configuration than that shown in FIG. 4.

The motor housing 22 includes an upper portion 60 having a plurality of slots or pockets 64 (only one of which is shown in FIG. 4) spaced about the central axis 38 at equal or unequal intervals in which the respective pairs of vibration isolation elements 54 are at least partially received. The motor housing 22 also includes a lower portion 68 coupled to the upper portion 60 (e.g., using a snap-fit, using fasteners, by welding, using adhesives, etc.) and having a corresponding plurality of fingers 72 that are engaged with the lower element 54 in each of the pairs of elements 54 to clamp the pairs of elements 54 between the upper portion 60 and the lower portion 68 of the motor housing 22, thereby axially securing the motor 18 to the motor housing 22.

With continued reference to FIG. 4, the motor housing 22 defines a cooling air passageway 62 including an inlet 66 disposed in the scroll 42 of the volute 14. The cooling air passageway 62 also includes an outlet 70, defined between the housing 22 and the outer can 46 of the motor 18, disposed beneath the centrifugal blower 26. As is described in greater detail below, during operation of the centrifugal blower assembly 10, some of the airflow in the scroll 42 is diverted from the scroll 42 to the cooling air passageway 62 via the inlet 66. From the inlet 66, the airflow is directed through the cooling air passageway 62 toward a bottom end 74 of the motor 18. The airflow is then redirected upwardly, around an interior wall 78 of the housing 22, toward a top end 82 of the motor 18. Because the motor 18 is configured as an open-frame motor 18, the airflow is allowed to pass through the interior of the can 46 to cool the internal components (e.g., the stator 48, the armature 49, commutator brushes, etc.) of the motor 18. The airflow through the cooling air passageway 62 is represented by the series of arrows A in FIG. 4. The resultant heated airflow exits the housing 22 through the outlet 70. Should a can-style motor be employed rather than the illustrated open-frame motor 18, the airflow may pass through the space or gap between the radially outermost surface of the can and a facing interior surface of the motor housing 22 (i.e., around the radially outermost surface of the can).

With reference to FIG. 1, the centrifugal blower 26 includes a hub 86 coupled to the output shaft 50 of the motor 18. In the illustrated construction of the centrifugal blower assembly 10, the hub 86 includes a central bore 102 coaxial with the axis 38 and sized to provide an interference fit with the output shaft 50 when coupled to the motor 18 (see FIG. 4). The interference fit is sufficient to substantially prevent relative movement (i.e., in both a rotational direction and an axial direction) between the blower 26 and the output shaft 50. Alternatively, any of a number of different processes (e.g., welding, brazing, adhering, etc.) may be employed in place of the interference fit to rotationally and axially secure the hub 86 to the output shaft 50. As a further alternative, the tip of the output shaft 50 may be configured having a non-circular cross-section, and the central bore 102 may include a corresponding non-circular cross-section to fix the blower 26 for co-rotation with the output shaft 50. In conjunction with this alternative construction, a threaded aperture may be formed in the tip of the output shaft 50, and a threaded fastener (e.g., a bolt or a screw) may be received in the central bore 102 and the threaded aperture to axially secure the hub 86, and therefore the centrifugal blower 26, to the output shaft 50. As yet another alternative, a separate adapter may be utilized to couple the hub 86 and the output shaft 50.

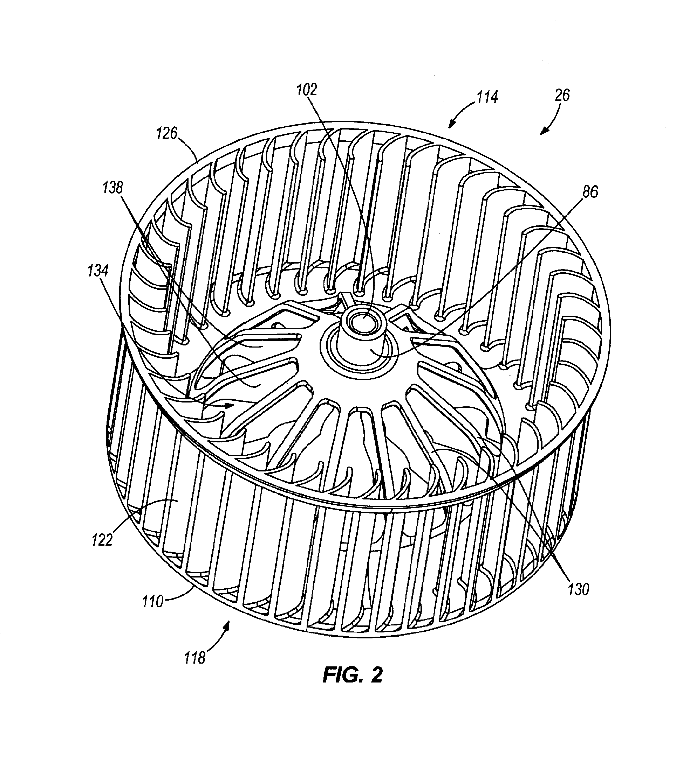

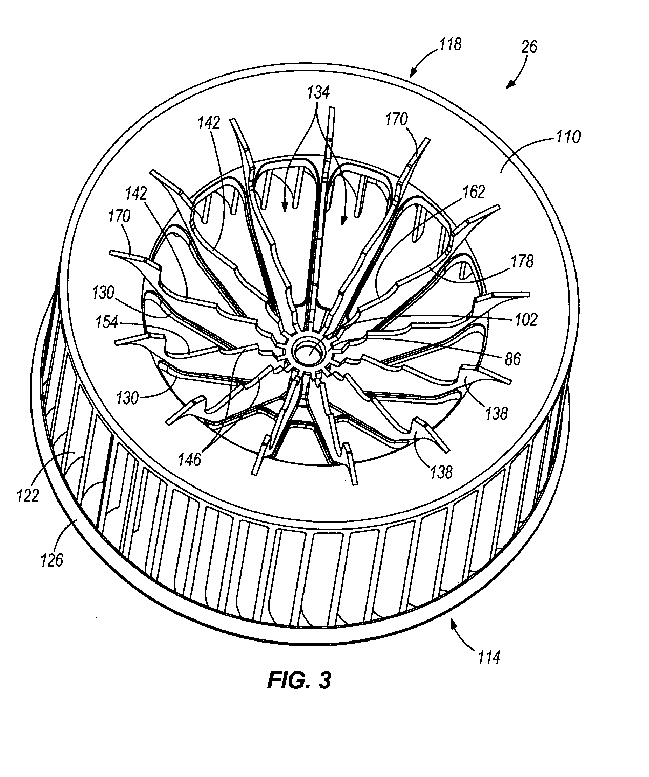

With reference to FIGS. 2 and 3, the centrifugal blower 26 includes an outer rim 110 that is concentric with the hub 86. As shown in FIG. 4, the hub 86 is also axially spaced from the outer rim 110, rather than being co-planar with the outer rim 110. Specifically, the hub 86 is positioned closer to a top end 114 of the centrifugal blower 26 rather than a bottom end 118 of the centrifugal blower 26, which is defined by the outer rim 110. This allows at least a portion of the motor 18 to fit inside the centrifugal blower 26. Alternatively, the hub 86 may be positioned coplanar with the outer rim 110, such that no portion of the motor 118 may fit inside the centrifugal blower 26.

With reference to FIGS. 2 and 3, the centrifugal blower 26 also includes a plurality of blades 122 coupled to the outer rim 110 and extending away from the outer rim 110 in a direction toward the top end 114 of the centrifugal blower 26 (i.e., a first direction) and substantially parallel with the axis 38. The centrifugal blower 26 also includes a band 126 interconnecting the top edges of the blades 122. As discussed above, the blades 122 are oriented with respect to the hub 86 to draw an airflow into the middle of the centrifugal blower 26 in a direction substantially parallel with the axis 38, and discharge the airflow in a radial direction with respect to the axis 38.

With continued reference to FIGS. 2 and 3, the centrifugal blower 26 also includes a plurality of spokes 130 interconnecting the hub 86 and the outer rim 110. The spokes 130 structurally support the outer rim 110, the blades 122, and the band 126 on the hub 86. In addition, torque from the motor 18 is transferred from the hub 86 to the outer rim 110 via the spokes 130. As a result, the spokes 130 are both weight-bearing and load-carrying structural elements. The centrifugal blower 26 includes a plurality of openings 134 arranged about the axis 38 and positioned between the hub 86 and the outer rim 110. Specifically, each of the openings 134 is defined by a combination of the hub 86, the outer rim 110, and two adjacent spokes 130. The openings 134 give the appearance that the middle of the centrifugal blower 26 is "open," rather than having a solid plate interconnecting the hub 86 and the outer rim 110. Such an open configuration of the blower 26 is known in the art as an "open-hub" centrifugal blower 26.

The centrifugal blower 26 also includes a plurality of cooling ribs 138 extending from the respective spokes 130 in a direction substantially parallel with the axis 38, toward the bottom end 118 of the centrifugal blower 26 (i.e., a second direction). Although the cooling ribs 138 are paired with the spokes 130 in a 1:1 ratio in the illustrated centrifugal blower 130, alternative constructions of the blower 26 may include some spokes 130 without any cooling ribs 138, while other constructions of the blower 26 may include some spokes 130 having more than one cooling rib 138. The illustrated blower 26 is integrally formed as a single piece (e.g., from a plastic material using a molding process). Alternatively, the blower 26 may be assembled from two or more pieces, and/or may be made from any of a number of different materials (e.g., a metal, a composite material, etc.).

With reference to FIGS. 3 and 4, the cooling ribs 138 extend from the respective spokes 130 within a running clearance (e.g., 3 mm) of the motor 18 and the housing 22, such that a distal edge 142 of each of the cooling ribs 138 substantially follows the contour of the motor 18 8 and the housing 22 and is in facing relationship with portions of the motor 18 and the housing 22. Specifically, a first distal edge portion 146 of each of the cooling ribs 138 is in facing relationship with and is oriented substantially parallel to a face 150 of the outer peripheral surface of the motor 18, which is oriented substantially normal to the rotational axis 38 of the blower 26 (see FIGS. 1 and 4). Also, a second distal edge portion 154 of each of the cooling ribs 138 is in facing relationship with and oriented substantially parallel to a face 158 of the housing 22, which is oriented substantially normal to the rotational axis 38 of the blower 26. The second distal edge portion 154 of each of the cooling ribs 138 is axially spaced from the first distal edge portion 146 of the cooling ribs 138, and an arcuate distal edge portion 162 of the cooling ribs 138 8 is positioned between the first and second distal edge portions 146, 154 to correspond with an arcuate corner 166 of the motor 18 (see FIG. 1).

With reference to FIGS. 3 and 4, each of the cooling ribs 138 also includes a third distal edge portion 170 in facing relationship with and oriented substantially parallel to a second face 174 of the housing 22, which is oriented substantially normal to the rotational axis 38 of the blower 26. In the illustrated construction of the centrifugal blower assembly 10, the third distal edge portion 170 of each of the cooling ribs 138 is also coplanar with the bottom surface of the outer rim 110. Alternatively, the third distal edge portion 170 of each of the cooling ribs 138 may be misaligned with the bottom surface of the outer rim 110. A second arcuate distal edge portion 178 of the cooling ribs 138 is positioned between the second and third distal edge portions 154, 170 to correspond with an arcuate corner 182 of the housing 22.

As shown in FIG. 4, each of the cooling ribs 138 extends to a radial dimension R1, relative to the axis 38, that is greater than an outermost radius R2 of the motor 18. Also, each of the cooling ribs 138 includes an axial length L, oriented substantially parallel to the axis 38, within which the face 150 of the motor 18 is disposed. In other words, at least a portion of the distal edge 142 of each of the cooling ribs 138 extends past (i.e., in the second direction toward the bottom end 118 of the centrifugal blower 26) the face 150 of the motor 18. In the illustrated construction of the centrifugal blower assembly 10, both of the second and third distal edge portions 154, 170 of each of the cooling ribs 138 also extend past the face 150 of the motor 18. Alternatively, the distal edge 142 of each of the cooling ribs 138 may be configured such that more or fewer than two edge portions (e.g., edge portions 154, 170) of each of the cooling ribs 138 extend past the face 150 of the motor 18.

In operation of the centrifugal blower assembly 10, the motor 18 drives the centrifugal blower 26 to create an airflow through the scroll 42. Most of the airflow created by the centrifugal blower 26 flows through the scroll 42 toward the outlet 34 of the volute 14. Some of the airflow in the scroll 42, however, is diverted from the scroll 42 to the cooling air passageway 62 via the inlet 66. As described above, from the inlet 66, the airflow (represented by the series of arrows A) is directed through the cooling air passageway 62 toward the bottom end 74 of the motor 18. The airflow is then redirected upwardly, around the interior wall 78 of the housing 22, toward the top end 82 of the motor 18. As the airflow moves upwardly toward the top end 82 of the motor 18, the airflow flows through the interior of the can 46 to cool the internal components (e.g., the stator 48, the armature 49, commutator brushes, etc.) of the motor 18. The resultant heated airflow is drawn through the outlet 70 of the cooling air passageway 62 by the rotating cooling ribs 138. The heated airflow is subsequently re-introduced into the blades 122 of the centrifugal blower 26 for recirculation into the scroll 42.

The cooling ribs 138 create a region of relatively low pressure proximate the outlet 70 of the cooling air passageway 62 during rotation of the blower 26. This, in conjunction with the region of relatively high pressure near the inlet 66 of the cooling air passageway 62, yields a larger pressure differential between the inlet 66 and the outlet 70 of the cooling air passageway 62 than what would otherwise result in the absence of the cooling ribs 138. By increasing the pressure differential between the inlet 66 and the outlet 70 of the cooling air passageway 62 in this manner, the flow rate of the airflow through the cooling air passageway 62 is increased, thereby enhancing the cooling effects on the motor 18.

Also, as a result of using the cooling ribs 138 to create the region of relatively low pressure proximate the outlet 70 of the cooling air passageway 62, some design flexibility relating to the positioning of the inlet 66 of the cooling air passageway 62 is permitted. In other words, the inlet 66 of the cooling air passageway 62 need not be located near the outlet 34 of the volute 14 where the pressure of the airflow is usually at its highest, nor need the inlet 66 be located at a radius larger than the radius of the blower 26 to divert some of the high-pressure airflow near the outlet 34 of the volute 14 toward the motor 18 for cooling. Rather, the inlet 66 of the cooling air passageway 62 may be located somewhere between the beginning of the scroll 42 and the outlet 34 of the volute 14 (see, for example, the position of the inlet 66 of the cooling air passageway 62 shown in FIG. 1), should the flow rate requirement of the airflow through the cooling air passageway 62 be less than some maximum value which is otherwise obtained by positioning the inlet 66 of the cooling air passageway 62 proximate the outlet 34 of the volute 14. The radially innermost edge of the inlet 66 of the cooling air passageway 62 may also be located at a radius less than the radius of the blower 26.

Various features of the invention are set forth in the following claims.

## Claims

1. An open-hub centrifugal blower comprising:
a hub rotatable about an axis;
an outer rim concentric with the hub;
a plurality of blades coupled to the outer rim;
a plurality of spokes interconnecting the hub and the outer rim; and
a cooling rib extending from at least one of the spokes.

2. The open-hub centrifugal blower of claim 1, wherein the cooling rib extends from a first of the plurality of spokes, and wherein the open-hub centrifugal blower further includes a second cooling rib extending from a second of the plurality of spokes.

3. The open-hub centrifugal blower of claim 1, wherein the blades extend from the outer rim in a first direction substantially parallel with the axis, and wherein the cooling rib extends from one of the plurality of spokes in an opposite, second direction substantially parallel with the axis.

4. The open-hub centrifugal blower of claim 3, wherein the outer rim is axially spaced from the hub in the second direction.

5. The open-hub centrifugal blower of claim 4, wherein the cooling rib also extends radially with respect to the axis.

6. The open-hub centrifugal blower of claim 5, wherein the cooling rib includes a first distal edge portion oriented substantially normal to the axis, and a second distal edge portion oriented substantially normal to the axis, and wherein the first and second distal edge portions are spaced from each other in a direction along the axis.

7. The open-hub centrifugal blower of claim 6, wherein the cooling rib includes an arcuate distal edge portion between the first and second distal edge portions.

8. The open-hub centrifugal blower of claim 7, wherein the cooling rib includes a third distal edge portion oriented substantially normal to the axis and spaced from the first and second distal edge portions in a direction along the axis.

9. The open-hub centrifugal blower of claim 8, wherein the arcuate distal edge portion between the first and second distal edge portions is a first arcuate distal edge portion, and wherein the cooling rib includes a second arcuate distal edge portion between the second distal edge portion and the third distal edge portion.

10. The open-hub centrifugal blower of claim 1, wherein the hub, the outer rim, a first of the plurality of spokes, and a second of the plurality of spokes adjacent the first spoke define an opening.

11. The open-hub centrifugal blower of claim 10, wherein the opening is a first opening, and wherein the hub, the outer rim, the second spoke, and a third of the plurality of spokes adjacent the second spoke define a second opening.

12. A centrifugal blower assembly comprising:
a volute;
a motor housing coupled to the volute;
a motor supported by the motor housing and having an output shaft; and
the open-hub centrifugal blower of any of claims 1-11 drivably coupled to the motor and positioned in the volute.

13. The centrifugal blower assembly of claim 12, wherein the cooling rib extends to a radial dimension, relative to the axis, that is greater than an outermost radius of the motor.

14. The centrifugal blower assembly of claim 12, wherein the motor includes an outer peripheral surface proximate the output shaft, and wherein the cooling rib includes a distal edge in facing relationship with the outer peripheral surface of the motor.

15. The centrifugal blower assembly of claim 14, wherein the distal edge of the cooling rib substantially follows the corresponding contour of the outer peripheral surface of the motor.
